# EUROPEAN PATENT APPLICATION

(11) **EP 4 760 363 A1**
(43) Date of publication of application: **17.06.2026**
(21) Application number: 24850348.4
(22) Date of filing: 08.07.2024
(51) Int. Cl.: G02B 5/18

(54) **TRANSMISSION TYPE DIFFRACTION GRATING AND METHOD FOR MANUFACTURING SAME**

(30) Priority: 09.08.2023 JP 2023130084
(71) Applicant: Hitachi High-Tech Corporation, Minato-ku Tokyo 105-6409 (JP)
(72) Inventor: YAEGASHI, Kenta, Tokyo 105-6409 (JP); AONO, Takanori, Tokyo 100-8280 (JP); UCHIDA, Isao, Tokyo 100-8280 (JP); MISHIMA, Hiroyuki, Tokyo 105-6409 (JP)
(74) Representative: Strehl & Partner mbB
(86) International application number: PCT/JP2024/024603
(87) International publication number: WO 2025/033058

(57) **Abstract**

Provided are a method for manufacturing a transmission type diffraction grating, which enables formation of a groove shape having a vertical side wall at a uniform groove height even when forming a shape with a high aspect ratio and different groove widths and groove intervals at respective positions, and a transmission type diffraction grating with high diffraction efficiency. A transmission type diffraction grating 100 has a plurality of grooves extending in one direction. The plurality of grooves are arranged in parallel to each other, the grooves have a substantially rectangular cross-sectional shape in a direction orthogonal to the extending direction thereof, and the plurality of grooves are arranged with different widths and/or at different intervals at respective positions where the grooves are formed.

## Description

### Technical Field

The present invention relates to a transmission type diffraction grating and a method for manufacturing the same.

### Background Art

A diffraction grating that refracts light is known as an optical element. Further, in recent years, for example, as described in NPL 1, it is also known to manufacture a surface structure (subwavelength structured surface (SWS)) having a period shorter than a wavelength of light, and an optical element having a new function can be implemented using this technique. Thus, with the period of the structure shorter than the wavelength of light, the structure is equivalent to a medium having a certain refractive index for light. Accordingly, since the refractive index can be controlled by a shape of a fine structure, any refractive index distribution can be attained.

Since optical anisotropy called structural birefringence occurs by imparting directionality to the structure, a strength or a direction of birefringence can be freely controlled. Further, wavelength dispersion characteristics can also be controlled by adjusting the period of the structure, and strong reflection or diffraction can be caused at a specific wavelength or incident angle using a resonance phenomenon of light in the structure.

By changing an occupancy rate of the SWS, a highly efficient diffraction grating can be attained using a fact that any refractive index distribution can be obtained.

A semiconductor manufacturing technique such as an electronic lithography device or a plasma etching apparatus is used for SWS manufacturing. An interference exposure method using an ultraviolet laser may also be used to create a simple pattern such as an antireflection structure. In addition, a technique of transferring the SWS from a mold using a nanoimprint method is also attained.

WO2008/114466A (PTL 1) discloses a technique of performing resist patterning on a silicon substrate and then performing etching to manufacture a prismatic shape on the silicon substrate.

### Citation List

### Patent Literature

PTL 1: WO2008/114466A

### Non Patent Literature

NPL 1: "An Introduction to Diffractive Optical Element", supervised by the Optical Design Group of the Optical Society of Japan, Japan Society of Applied Physics, published by Optronics Co., Ltd., and issued on May 20, 1997.

### Summary of Invention

### Technical Problem

An SWS diffraction grating is expected to have high diffraction efficiency. However, in order to attain high diffraction efficiency in an SWS diffraction grating, a manufacturing technique for forming grooves having a rectangular cross-sectional shape at a uniform height and different widths and intervals at respective formation positions is required.

For example, in a case of a transmission type SWS diffraction grating used in a near-infrared to infrared band, it is necessary to form, on a silicon substrate, rectangular grooves having a minimum dimension of 70 nm or less, a groove height of 800 nm or more, and an aspect ratio of 10 or more.

In the interference exposure method using an ultraviolet laser, which is a semiconductor manufacturing technique in the related art, processing accuracy for forming a groove shape with the above-described minimum dimension is insufficient. In an electron beam lithography device capable of manufacturing fine patterns, it is possible to perform patterning of the above dimension. However, in plasma etching for etching a silicon substrate, variation in groove height occurs due to a difference in SWS width, and thus a diffraction grating with high diffraction efficiency cannot be provided.

In WO2008/114466A (PTL 1), resist patterning is performed on the silicon substrate, and then etching is performed to manufacture a prism on the silicon substrate. However, no technique of forming grooves having different groove widths and groove intervals at respective positions is disclosed, and thus it is difficult to provide a transmission type SWS diffraction grating with high diffraction efficiency.

To solve the problem in the related art described above, an object of the invention is to provide a technique for manufacturing a transmission type diffraction grating, which enables formation of a groove shape with a vertical side wall and a uniform groove height even when forming a shape with a high aspect ratio and different groove widths and groove intervals at respective positions, and a transmission type diffraction grating with high diffraction efficiency.

### Solution to Problem

To solve the above problem, a transmission type SWS diffraction grating according to an example of the invention is a transmission type diffraction grating having a plurality of grooves extending in one direction, in which the plurality of grooves are arranged in parallel to each other, the grooves have a substantially rectangular cross-sectional shape in a direction orthogonal to the extending direction thereof, and the plurality of grooves are arranged with different widths and/or at different intervals at respective positions where the grooves are formed.

In addition, a method for manufacturing a transmission type diffraction grating according to an example of the invention is a method for manufacturing a transmission type diffraction grating having a plurality of grooves extending in one direction. The method includes: (a) aligning a direction in which the grooves are formed with a crystal plane of a silicon wafer; (b) forming a protective film on a surface of the silicon wafer after (a); (c) forming a photoresist film on one surface on which the protective film is formed after (b), and forming a resist pattern having a desired shape by photolithography; (d) removing the protective film exposed from the resist pattern after (c); (e) removing the resist pattern after (d); (f) etching the silicon wafer to form the plurality of grooves in the silicon wafer after (e); and (g) removing the oxide film to obtain a diffraction grating after (f), in which the plurality of grooves are arranged in parallel to each other, the grooves have a substantially rectangular cross-sectional shape in a direction orthogonal to the extending direction thereof, and the plurality of grooves are arranged with different widths and/or at different intervals at respective positions where the grooves are formed.

### Advantageous Effects of Invention

According to the transmission type diffraction grating of the invention, it is possible to provide a diffraction grating with high diffraction efficiency, a groove shape with a vertical side wall, a uniform height, and different widths and intervals at respective positions.

In addition, according to the method for manufacturing a transmission type diffraction grating of the invention, it is possible to manufacture a groove shape with a vertical side wall and a uniform height even when forming the groove shape with different widths or intervals at respective positions, and a diffraction grating with high diffraction efficiency can be easily manufactured.

### Brief Description of Drawings

[FIG. 1] FIG. 1 is a diagram illustrating a method for manufacturing a diffraction grating according to Embodiment 1 of the invention.
[FIG. 2] FIG. 2 is a schematic view of a (110) silicon wafer.
[FIG. 3] FIG. 3 is a diagram illustrating a method for adjusting a crystal direction of the (110) silicon wafer and a direction in which grooves of the diffraction grating are formed.
[FIG. 4] FIG. 4 is a diagram illustrating a cross-sectional shape of the diffraction grating according to one embodiment of the invention.
[FIG. 5] FIG. 5 is a diagram illustrating a method for manufacturing a diffraction grating according to Embodiment 2 of the invention.

### Description of Embodiments

Hereinafter, embodiments of the invention will be described in detail with reference to the drawings. In the following embodiments, it is needless to mention that components (also including element steps and the like) thereof are not necessarily essential unless otherwise specified or unless clearly considered to be essential in principle.

### [Embodiment 1]

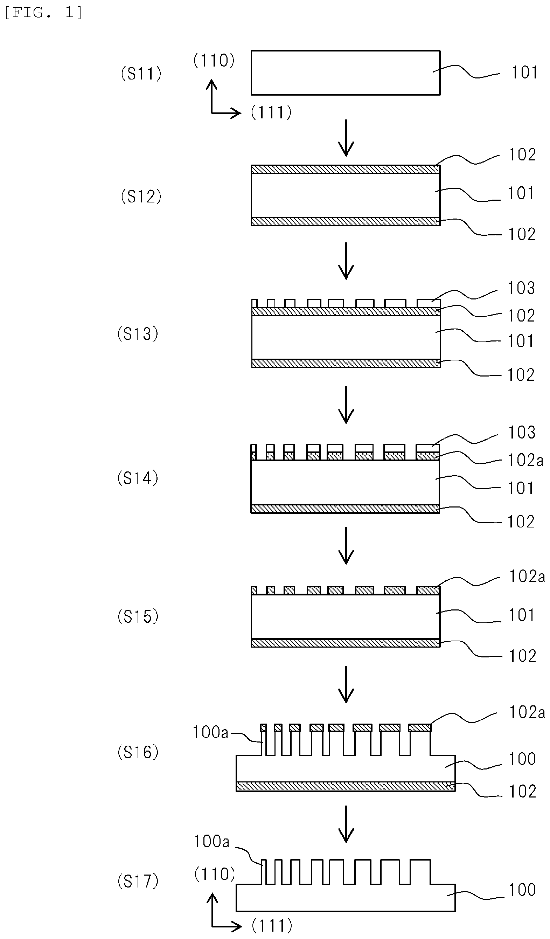

A diffraction grating and a method for manufacturing the same according to Embodiment 1 of the invention will be described below with reference to FIGS. 1 to 3.

### <Method for Manufacturing Diffraction Grating>

An outline of the method for manufacturing a diffraction grating according to Embodiment 1 is to sequentially perform operations of steps S11 to S17 to be illustrated below (FIG. 1). FIG. 1 illustrates a flow of steps in this manufacturing method and a schematic cross-sectional view at that time. Through these steps, the diffraction grating according to Embodiment 1 can be manufactured.

S11: adjust a direction of a (110) silicon wafer 101 and a direction in which grooves of the diffraction grating are formed.

S12: form an oxide film 102 on all surfaces of the (110) silicon wafer 101.

S13: apply a photoresist to one of the surfaces on which the oxide film 102 is formed, and form a photoresist 103 patterned into a desired shape (a shape for forming a groove shape) using photolithography.

S14: remove the oxide film 102 on exposed portions where the photoresist 103 is not formed to form an oxide film 102a.

S15: remove the photoresist 103 remaining on the oxide film 102a.

S16: etch the (110) silicon wafer 101 to form a groove structure formed of silicon, and obtain a diffraction grating 100. In the present description, "groove" refers to a portion formed as a protruding portion.

S17: remove the oxide film 102a remaining on the formed grooves and the oxide film 102 on the other surface.

### <<Regarding (110) Silicon Wafer>>

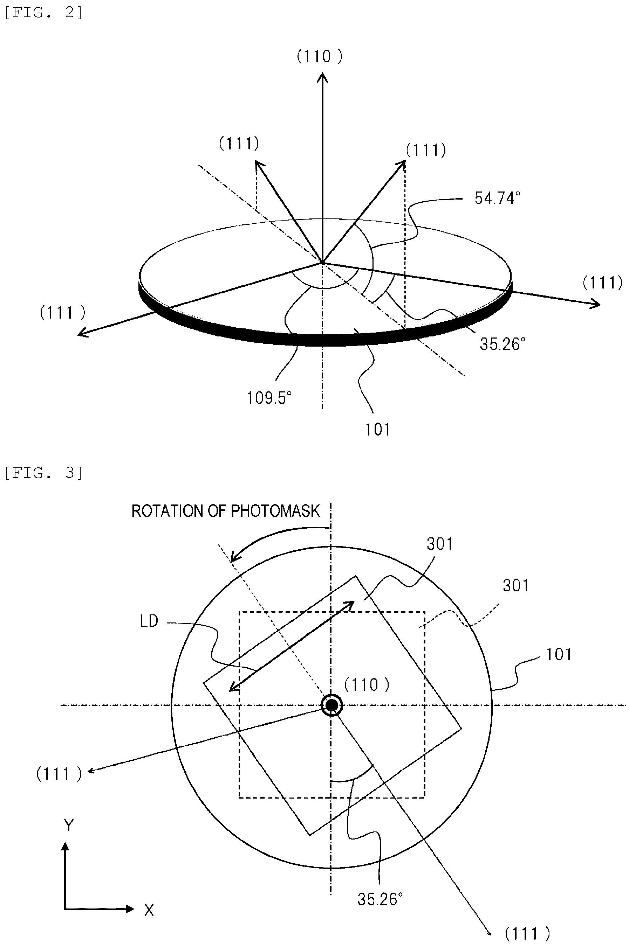

In manufacturing of the above diffraction grating, first, a silicon wafer used to manufacture the diffraction grating is prepared. The (110) silicon wafer used here will be described with reference to FIG. 2. First, positions of (111) planes on the (110) silicon wafer 101, which is a material for manufacturing the diffraction grating, are illustrated in FIG. 2. In FIG. 2, arrows indicate normal directions of the plane.

It can be seen from FIG. 2 that the (111) planes on the (110) silicon wafer 101 include planes perpendicular to a (110) plane and planes oblique thereto. Further, an angle between the (111) planes perpendicular to the (110) plane is 109.5°. This illustrates a crystal plane formed during a growth of a silicon crystal, which is specific to single crystal silicon.

In Embodiment 1, a rectangular shape having a high aspect ratio is formed by using a difference in etching rate due to crystal anisotropy and using the above (111) planes perpendicular to the (110) plane of silicon. That is, a desired groove shape is formed with high accuracy by using a characteristic that the (111) plane is less likely to be etched (has a low etching rate) than other planes such as the (110) plane of the silicon.

Therefore, as the silicon wafer used in Embodiment 1, a wafer sliced from an ingot with the (110) plane serving as a surface is used (as illustrated in FIG. 2, the silicon wafer 101 whose surface illustrated as a horizontal plane is the (110) plane).

### <<Regarding Adjustment of Groove Formation Direction>>

Then, a position of the prepared silicon wafer is adjusted such that the crystal plane is in a predetermined arrangement (S11). Specifically, a method for adjusting the direction of the (111) planes of the (110) silicon wafer 101 and the direction in which the grooves of the diffraction grating are formed in step S11 will be described with reference to FIG. 3.

In Embodiment 1, a rectangular shape with a vertical side wall is formed on a silicon substrate by using a difference in etching rate between the (110) plane and the (111) plane. Therefore, as illustrated in FIG. 3, one of the (111) planes perpendicular to the (110) plane is aligned with a longitudinal direction of the diffraction grating. FIG. 3 illustrates a positional relationship between the silicon wafer 101 and a photomask 301 disposed above the (110) plane of the silicon wafer 101. At this time, an opening is formed in the photomask 301 according to a to-be-formed groove shape. This opening is an opening corresponding to the shape of grooves extending in one direction, and is formed as a rectangular opening corresponding to the extending direction (longitudinal direction) of the grooves and a width direction (lateral direction) of the grooves orthogonal to the extending direction.

In FIG. 3, as a method for adjusting a position of the (111) plane of the (110) silicon 101 and positions of the grooves of the diffraction grating in the longitudinal direction, a method for performing the adjustment by relatively rotating the photomask 301 used in photolithography is described. That is, after the (110) silicon wafer 101 is placed and fixed on a lithography apparatus such that the (111) plane is in a vertical direction, the photomask 301 is relatively rotated according to the (110) silicon wafer 101 and an opening shape in the photomask 301 disposed above the (110) silicon wafer 101, and the (111) plane is aligned with the longitudinal direction of the grooves of the diffraction grating.

In step S11, it is sufficient to use the method of aligning the (111) plane with the longitudinal direction of the grooves of the diffraction grating, and the same effect can be attained even when the adjustment is performed by fixing the photomask 301 and relatively rotating the (110) silicon wafer.

### <<Regarding Formation of Oxide Film>>

Next, step S12 will be described. After the above position adjustment, as illustrated in step S12 of FIG. 1, the oxide film 102 serving as a mask (protective film) is formed on all the surfaces of the silicon wafer 101 during crystal anisotropic etching. To form the oxide film 102, a known oxide film forming method is used in this type of step, and is not particularly limited. As the oxide film forming method, for example, a thermal oxidation method, a vacuum evaporation method, and a chemical vapor deposition (CVD) method can be used.

### <<Regarding Resist Patterning>>

Next, step S13 will be described. First, the photoresist (photosensitive organic substance) 103 is applied to one of the surfaces of the silicon wafer 101 on which the oxide film 102 is formed. Next, the photoresist applied onto the silicon wafer 101 is exposed using a mask pattern drawn on the photomask, and is developed to transfer the mask pattern to the photoresist. The transferred mask pattern obtained here has a shape (plan view shape) corresponding to the groove shape of the diffraction grating.

This photoresist 103 is roughly classified into a negative type and a positive type according to a method for reaction with light or an electron beam. When the negative type is exposed, solubility thereof in a developer decreases, and an exposed portion remains after development. On the other hand, when the positive type is exposed, solubility thereof in the developer increases, and an exposed portion is removed during the development. The photoresist 103 used in step S13 may be either the negative type or the positive type.

Although a wavelength of an exposure device for performing exposure is using the mask pattern includes (KrF excimer laser), 193 nm (ArF excimer laser), and the like, and in the present embodiment, an exposure device of any wavelength may be used. Although photolithography is used as a method for resist patterning in step S13, the same effect can be also attained by using an electron beam (EB) lithography device.

### <<Regarding Removal of Oxide Film on Silicon Surface>>

Next, step S14 will be described. In step S14, a part of the oxide film 102 is removed such that only the oxide film 102 below the patterned photoresist 103 remains. By removing the oxide film, the oxide film 102a corresponding to the above patterning shape remains on the silicon wafer 101. To remove the oxide film 102, a known oxide film removal method is used in this type of step, and is not particularly limited. As a method for removing the oxide film 102, for example, a silicon surface can be exposed by dry etching using a plasma etching apparatus. Alternatively, the oxide film 102 may be removed by wet etching using hydrofluoric acid.

### <<Regarding Removal of Photoresist>>

Next, step S15 will be described. In step S15, the photoresist 103 patterned in step S13 is removed. To remove the photoresist 103, a known method for removing the photoresist 103 is used in this type of step, and is not particularly limited. Examples of the method for removing the photoresist 103 include a removal method using a plasma ashing apparatus or using an organic solvent.

### <<Regarding Formation of Vertical Side Wall on Silicon Surface>>

Next, step S16 will be described. As illustrated in FIG. 1, in step S16, the crystal anisotropic etching is performed on the (110) silicon wafer 101 to form a shape of the diffraction grating 100. The crystal anisotropic etching performed on the silicon wafer 101 can be performed using an alkaline aqueous solution such as potassium hydroxide (KOH) or tetramethylammonium aqueous solution (TMAH) as an etchant.

In the etching using the alkaline aqueous solution, the etching proceeds on the silicon surface having no oxide film and formed (exposed) in a band shape, and a plurality of protruding grooves having vertical side surfaces are formed in the silicon substrate. Protruding portions formed in this manner have a substantially rectangular cross-sectional shape in the extending direction of the grooves and a direction orthogonal to the extending direction thereof. That is, the plurality of grooves protruding in a rectangular parallelepiped shape are formed on one surface of the silicon substrate. At this time, in the above step S11, since the position adjustment is performed such that rectangular top portions form the (110) plane and side surface portions form the (111) plane, the groove shape can be efficiently formed as a desired shape.

As in the present embodiment, by performing predetermined position adjustment and applying the crystal anisotropic etching, it is possible to manufacture a diffraction grating (SWS structure) with a small variation in groove height and a high aspect ratio even when etching a shape with different groove widths or intervals between the grooves at respective formation positions. Then, the diffraction grating obtained in this manner is a diffraction grating with high diffraction efficiency.

### <<Regarding Removal of Oxide Film on Grooves>>

Next, step S17 will be described. In step S17, the oxide film 102a on the grooves used as an etching mask is removed. To remove the oxide film 102a, a known oxide film removal method is used in this type of step, and is not particularly limited. As a method for removing the oxide film 102, for example, etching using hydrogen fluoride or dry etching using a plasma etching apparatus can be performed.

### <Diffraction Grating>

Next, the diffraction grating according to Embodiment 1 will be described. The diffraction grating is manufactured by the method for manufacturing a diffraction grating as described above. At this time, as described above, the diffraction grating has a characteristic structure obtained by using a fact that the diffraction grating (SWS structure) with a small variation in groove height and a high aspect ratio can be manufactured even when etching the shape with different groove widths or intervals between the grooves at respective formation positions.

That is, the diffraction grating according to Embodiment 1 is a transmission type diffraction grating having a plurality of grooves extending in one direction, in which the plurality of grooves are arranged in parallel to each other, the grooves have a substantially rectangular cross-sectional shape in the direction orthogonal to the extending direction thereof, and further, the plurality of grooves are arranged with different widths and/or at different intervals at respective positions where the grooves are formed. The diffraction grating may have a structure in which a part of the grooves are arranged with the same width or at the same interval.

In the diffraction grating according to Embodiment 1, even when the plurality of grooves are arranged with different widths and/or at different intervals at respective positions where the grooves are formed, the cross-sectional shape of the grooves can be stably formed in a substantially rectangular shape. In addition, since the groove height can also be made uniform, the diffraction grating with high efficiency is obtained. The plurality of grooves formed at this time form the surface structure (SWS) such that each of the grooves has a period shorter than an operation wavelength, and thus the transmission type diffraction grating can be made.

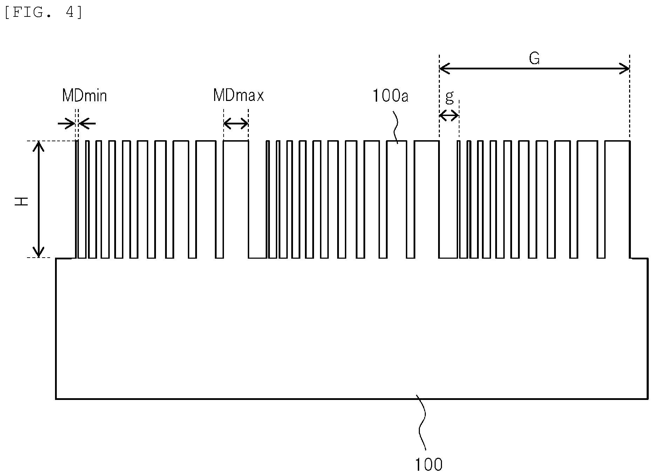

As an example of the diffraction grating according to Embodiment 1, FIG. 4 is a schematic diagram illustrating a cross-sectional shape thereof. The diffraction grating 100 illustrated in FIG. 4 has a plurality of grooves 100a extending in one direction (the extending direction is a depth direction in FIG. 4), and these grooves are arranged in parallel to each other. Then, these grooves 100a each have a substantially rectangular cross-sectional shape (vertical cross-sectional shape of the diffraction grating) in the direction orthogonal to the extending direction of the grooves.

An example is illustrated in which the plurality of grooves 100a are formed by a repetition at a period G larger than the wavelength while changing the groove widths and the groove intervals at respective positions in a structure of a period g smaller than the wavelength. Here, in one period G, the grooves each having a different width are arranged such that sizes of the widths sequentially increase from left to right in FIG. 4.

In a diffraction grating used in an analysis device, a diffraction grating in which diffraction efficiency of a first-order diffracted light at a specific wavelength is maximized is mainly used. To maximize the diffraction efficiency of the first-order diffracted light at the specific wavelength in the SWS diffraction grating, it is necessary to change a width of the groove 100a from a small width to a gradually large width as illustrated in FIG. 4.

For example, in the transmission type SWS diffraction grating used for a near-infrared to infrared band, a width of the groove 100a at a narrowest position is 70 nm or less, and a width of the groove 100a at a widest position is three times or more the width at the narrowest position. In addition, a height of the groove 100a is required to be 800 nm or more.

That is, it is preferable that a minimum width processing dimension (minimum width) MDmin in the cross-sectional shape of the groove 100a in FIG. 4 is 70 nm or less, and a height H of the groove 100a is 800 nm or more. Here, by setting a maximum width processing dimension (maximum width) MDmax of the groove 100a to three times or more MDmin, the SWS diffraction grating used for the near-infrared to infrared band can be made. At this time, it is preferable that the efficiency can be further improved by forming the grooves in which a ratio (aspect ratio) of a long side to a short side of the rectangle is 10 or more in the substantially rectangular cross-sectional shape of the groove 100a.

The diffraction grating according to the present embodiment is not limited to the above description, and in design of the shape of the diffraction grating, an optimal solution may be obtained such that the diffraction efficiency at a desired wavelength is increased by using a calculation technique such as a rigorous coupled-wave analysis (RCWA) method for the groove widths, the intervals between the grooves, and the groove heights in the SWS diffraction grating.

### [Embodiment 2]

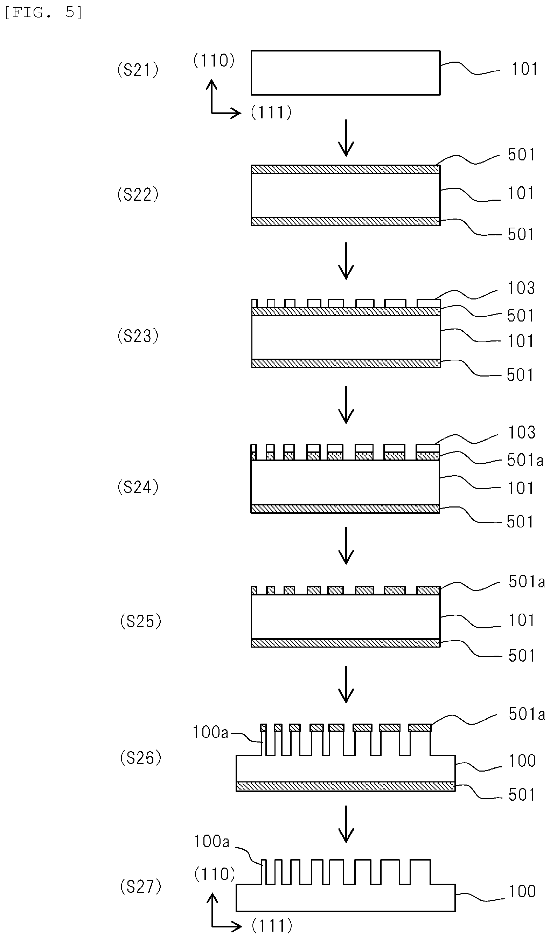

Next, a method for manufacturing a diffraction grating according to Embodiment 2 of the invention will be described. An outline of the method for manufacturing the diffraction grating according to Embodiment 2 is to sequentially perform operations of steps S21 to S27 to be illustrated below (FIG. 5). FIG. 5 illustrates a flow of steps in this manufacturing method. Through these steps, the diffraction grating according to Embodiment 2 can be manufactured.

S21: adjust a direction of the (110) silicon wafer 101 and a direction in which grooves of the diffraction grating are formed.

S22: form a nitride film 501 on all surfaces of the (110) silicon wafer 101.

S23: apply the photoresist 103 to one of the surfaces on which the nitride film 501 is formed, and form the photoresist 103 patterned into a desired shape (a shape for forming a groove shape) using photolithography.

S24: remove the nitride film 501 on exposed portions where the photoresist 103 is not formed to form a nitride film 501a.

S25: remove the photoresist 103 remaining on the nitride film 501a.

S26: etch the (110) silicon wafer 101 to form a groove structure formed of silicon, and obtain a diffraction grating 100.

S27: remove the nitride film 501a remaining on the formed grooves and the nitride film 501 on the other surface.

The method for manufacturing a diffraction grating according to Embodiment 2 will be described below. In Embodiment 2, step S21 and steps S23, S25 to S26 are the same as step S11 and steps S13, S15 to S16 corresponding to Embodiment 1, respectively. Therefore, in the method for manufacturing a diffraction grating, a description thereof will be omitted below, and differences will be mainly described.

### <Formation of Nitride Film>

Step S22 will be described. Embodiment 2 is different from Embodiment 1 in that the nitride film 501 (silicon nitride: SiN) is formed. Since a silicon nitride film has high selectivity with silicon and is not etched by an alkaline aqueous solution such as KOH or TMAH, a deep groove can be formed even when the nitride film is formed as a fairly thin film as compared with the method using an oxide film.

To form the nitride film 501, a known method can be used, and is not particularly limited. For example, a CVD method can be used to form the nitride film 501.

By forming the thin nitride film 501, etching of the nitride film 501 in the next step S24 can be completed in a short time. That is, since the photoresist 103 in the previous step can also be formed as a thin film, accuracy of a resist pattern to be formed can be improved.

### <Description of Removal of Nitride Film>

Next, step S27 will be described. In step S27, the nitride film 501a on the grooves is removed. To remove the nitride film 501a, a known nitride film removal method is used in this type of step, and is not particularly limited. As a method for removing the nitride film 501, etching using hot phosphoric acid heated to 150°C or dry etching using a plasma etching apparatus can be performed.

In this manner, Embodiment 2 also has a characteristic structure obtained by using a fact that the diffraction grating (SWS structure) with a small variation in groove height and a high aspect ratio can be manufactured even when etching a shape with different groove widths or intervals between the grooves at respective formation positions as described above. Since a transmission type diffraction grating obtained in Embodiment 2 has the same configuration as the transmission type diffraction grating obtained in Embodiment 1, description thereof is omitted.

The invention is not limited to the embodiments described above and includes various modifications. The above embodiments have been described in detail to describe the invention in an easy-to-understand manner, and the invention is not necessarily limited to those including all configurations described above. A configuration according to one embodiment can be added to, deleted from, or replaced with a configuration according to another embodiment.

### Reference Signs List

- 100:: diffraction grating
- 100a:: groove
- 101:: (110) silicon wafer
- 102:: oxide film
- 102a:: oxide film
- 103:: photoresist
- 301:: photomask
- 501:: nitride film
- 501a:: nitride film

## Claims

1. A transmission type diffraction grating having a plurality of grooves extending in one direction, wherein
the plurality of grooves are arranged in parallel to each other, and the grooves have a substantially rectangular cross-sectional shape in a direction orthogonal to the extending direction of the grooves, and
the plurality of grooves are arranged with different widths and/or at different intervals at respective positions where the grooves are formed.

2. The transmission type diffraction grating according to claim 1, wherein
the plurality of grooves are formed of silicon, and
a top portion of each of the plurality of grooves forms a (110) plane and a side surface thereof forms a (111) plane.

3. The transmission type diffraction grating according to claim 1, wherein
the plurality of grooves include grooves having a width of 70 nm or less and a height of 800 nm or more.

4. The transmission type diffraction grating according to claim 3, wherein
in the plurality of grooves, a maximum width processing dimension of the grooves is three times or more a minimum width processing dimension of the grooves.

5. The transmission type diffraction grating according to claim 3, wherein
the plurality of grooves include the grooves having a substantially rectangular cross-sectional shape in which a ratio (aspect ratio) of a long side to a short side is 10 or more.

6. A method for manufacturing a transmission type diffraction grating having a plurality of grooves extending in one direction, the method comprising:
(a) aligning a direction in which the grooves are formed with a crystal plane of a silicon wafer;
(b) forming a protective film on a surface of the silicon wafer after (a);
(c) forming a photoresist film on one surface on which the protective film is formed after (b), and forming a resist pattern having a desired shape by photolithography;
(d) removing the protective film exposed from the resist pattern after (c);
(e) removing the resist pattern after (d);
(f) etching the silicon wafer to form the plurality of grooves in the silicon wafer after (e); and
(g) removing the oxide film to obtain a diffraction grating after (f), wherein
the plurality of grooves are arranged in parallel to each other, and the grooves have a substantially rectangular cross-sectional shape in a direction orthogonal to the extending direction thereof, and
the plurality of grooves are arranged with different widths and/or at different intervals at respective positions where the grooves are formed.

7. The method for manufacturing a transmission type diffraction grating according to claim 6, wherein
in the above-described (a), a photomask used to form the grooves is rotated relative to the crystal plane of the silicon wafer.

8. The method for manufacturing a transmission type diffraction grating according to claim 6, wherein
the protective film is an oxide film or a nitride film.
